(19)

Europäisches
Patentamt
European
Patent Office
Office européen
des brevets

(11)   **EP 2 690 775 A2**

(12)                           **EUROPEAN PATENT APPLICATION**

(43) Date of publication:
**29.01.2014  Bulletin 2014/05**

(51) Int Cl.:
**H02M 7/00** (2006.01)

(21) Application number: **13173854.4**

(22) Date of filing: **26.06.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **26.07.2012  JP 2012165538**

(71) Applicant: **Hitachi Ltd.**
**Tokyo (JP)**

(72) Inventors:
• **Iwaji, Yoshitaka**
**Chiyoda-ku,**
**Tokyo 100-8220 (JP)**

• **Yamamoto, Kouki**
**Chiyoda-ku,**
**Tokyo 100-8220 (JP)**
• **Sakai, Toshifumi**
**Chiyoda-ku,**
**Tokyo 100-8220 (JP)**

(74) Representative: **Gill, Stephen Charles et al**
**Mewburn Ellis LLP**
**33 Gutter Lane**
**London**
**EC2V 8AS (GB)**

(54)   **Drive system for alternating current motors and electric motorized vehicles**

(57)    A drive system for an alternating current motor including a three-phase alternating current motor, an inverter to drive the alternating current motor, and a controller to drive the inverter by pulse width modulation contains a means for performing pulse width modulation by comparing the carrier wave with the fundamental wave, by calculating the phase θfc of the carrier wave in order to perform pulse width modulation simultaneously with calculating the fundamental wave phase θd to the alternating current motor based on the instantaneous value of frequency command ω1 of the alternating current motor calculated by the controller.

FIG. 1

## Description

Technical Field

The present invention relates to a drive system for alternating current motors and to electric motorized vehicles and relates to control devices for rotating machinery such as electric railway cars, electric vehicles, industrial inverters, wind-powered generators and diesel generator system, etc.

Background Art

Along with the worldwide trend towards energy-saving and global environmental conservation, motors driven by inverters are finding applications in a diverse array of products. Among these products, applications are also expanding in fields utilizing large capacity motors such as in electric railway cars and wind-powered generating systems. Progress is being made in making motors in motor drive systems for electric railway cars more efficient to achieve high efficiency and streamlined operation and in making the converters for driving those motors more efficient. Alternating current (hereafter called AC) generators and power converters are also being utilized in diesel electric generating systems that are used in railway cars operating in non-electrified zones. In the wind-powered electrical generating field, electrical generators from several hundred kW to several MW are being developed since large-capacity and higher voltage motors are needed to boost efficiency to still higher levels.

Studies are also being made on how to suppress losses in converter units used in power converters with the goal of achieving streamlined and efficient systems. The most efficient method for reducing power losses in converters is to lower the average value of the switching frequency and in large-capacity converters the converter switching operation is for example carried out at a carrier frequency within a few hundred hertz.

A scheme is employed for railway cars as shown in patent document 1 to regulate the number of pulses during PWM (pulse width modulation) in the high speed range so that the switching count does not increase. Generally, "synchronous PWM" is utilized to generate pulses that synchronize the drive frequency of the alternating current motor with the carrier frequency during PWM, to suppress an increase in the switching count while simultaneously preventing the outflow of excess harmonics.

The design of rotating machinery is also shifting to designs that stress efficiency. Achieving a high-efficiency rotary machinery design requires reducing the winding resistance (copper loss) which is one electrical constant, to an absolute minimum. Moreover, increasing the capacity of the motor requires reducing losses from a thermal design aspect, to attain rotary machinery with the required small resistance value.

However, rotating machinery with low resistance values tends to easily become unstable during torque regulation. In the high rotation speed regions in particular, the interference phenomenon occurring between excitation current and torque current in alternating current (hereafter AC) motors becomes drastic and in some cases causes vibration and emission. In order to limit this interference phenomenon, vector control is generally applied to isolate the induction current components and torque current components in the AC current of the motor. Moreover, when the switching count of the inverter driving the rotating machinery is low, the delay in control response becomes a problem and the above mentioned vibration and emission phenomenon is prone to occur. A countermeasure applied to these problems is the method of patent document 2 that controls the torque by subdividing the carrier waveform.

Citation List

Patent Literature

Patent document 1: Japanese Unexamined Patent Application Publication No. 2005-237194
Patent document 2: Japanese Unexamined Patent Application Publication No. Hei8(1996)-251930

SUMMARY

The commonly utilized method called synchronous PWM requires synchronizing the drive frequency with the carrier frequency and therefore cannot provide fast response. The operation in this method therefore falls into an unstable state when driving more highly efficient motors. In high speed operation in particular and for railway car applications where torque control is necessary, the problem occurs that deteriorated control performance might affect the acceleration/ deceleration characteristics. The method in patent document 1 becomes incapable of controlling the voltage as needed at the point in time of entering the voltage saturation region and the control performance deteriorates. In the method in patent document 2, the control response can be improved however the synchronous PWM is not taken into account and so unless changes are made this method cannot be applied to applications having a high drive frequency such as railway applications.

The present invention includes common vector control technology, and also contains sections related to the invention in patent document 2 and so these technology and sections are described in detail while referring to Fig. 17 and Fig. 18.

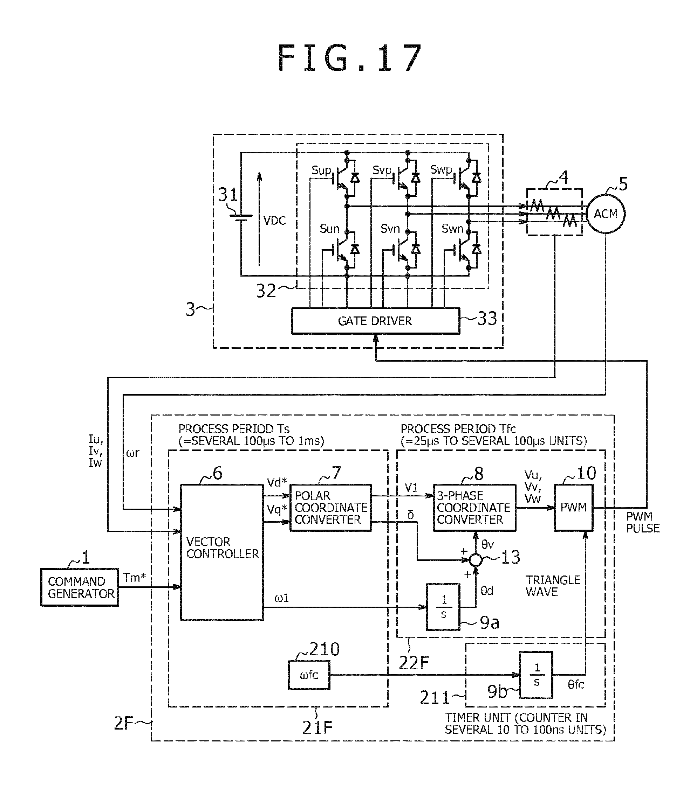

Fig. 17 is a diagram of the motor drive system for driving the AC motor 5. The structural elements in Fig. 17 are a command generator 1 to generate a torque command Tm* for the AC motor 5, a controller 2 to carry out control to generate torque matching the torque command Tm*, an inverter 3 to drive the AC motor 5, and a current sensor 4 to detect the current flowing in the AC motor 5.

The inverter 3 is comprised of a direct current power supply 31 that supplies electrical power to the inverter, an inverter main circuit unit 32 comprised of the six switching elements Sup through Swn, and a gate driver 33 to directly drive the inverter main circuit unit 32.

The command generator 1 is a controller ranking above the controller 2, and that generates a torque command Tm* for the AC motor 5. If a drive system for railway cars, the command generator 1 utilizes a torque command is applied but if for example an industrial drive system for fans or pumps, then a rotation speed command is applied.

The controller 2 controls the torque generated from the AC motor 5 based on the torque command from the command generator 1. The controller 2 is internally comprised of a vector control unit 21F and a PWM processor unit 22. The vector control unit 21F is further divides the AC current detection values for the AC motor 5 into the three-phase alternating current Iu, Iv, Iw into a torque current component (q axial current component) and excitation current component (d axial current component) and performs current control of each component.

As a result of the current control the voltage command Vd* and the Vq* on the dq axis that serves as the rotary coordinate axis are calculated, and converted by the polar coordinate converter 7 into the amplitude V1 and voltage command phase $\delta$. The vector arithmetic and logic unit 6 also calculates the drive frequency $\omega$1 of the AC motor 5, and outputs that drive frequency $\omega$1 to the PWM processor unit 22F. The carrier frequency setter unit 210 in the vector controller unit 21F sets the carrier frequency $\omega$fc utilized in the PWM.

The coordinate-converted V1 (voltage amplitude command), and the $\delta$ (voltage phase command), the drive frequency $\omega$1, and the carrier frequency $\omega$fc are input into the PWM processor unit 22F to perform PWM. The integrator 9a integrates the drive frequency $\omega$1, and calculates the control phase $\theta$d. The 3-phase coordinate converter 8 converts V1, $\delta$ which are the voltage commands for the polar coordinate, into the 3-phase AC voltage commands Vu, Vv, Vw, and the PWM pulse generator 10 performs pulse width modulation. The PWM pulse generator 10 compares the carrier wave of the triangle wave with the 3-phase AC voltage commands Vu, Vv, Vw, and outputs a PWM waveform. The carrier wave is generally utilized in an up-down counter and is generated by the timer unit 211. The phase $\theta$fc of the carrier wave can in a physical meaning be regarded as obtained by integration of the carrier frequency $\omega$fc.

The operation of the controller 2 is as follows. The vector controller unit 21F regulates the current of the d axis and q axis so that the AC motor 5 generates a torque as specified by the torque command Tm*. This calculation processing period is set as Ts. The PWM processor unit 22F consequently performs pulse width modulation based on the voltage commands V1, $\delta$, and the drive frequency $\omega$1 that were obtained. This calculation processing period is set as Tfc.

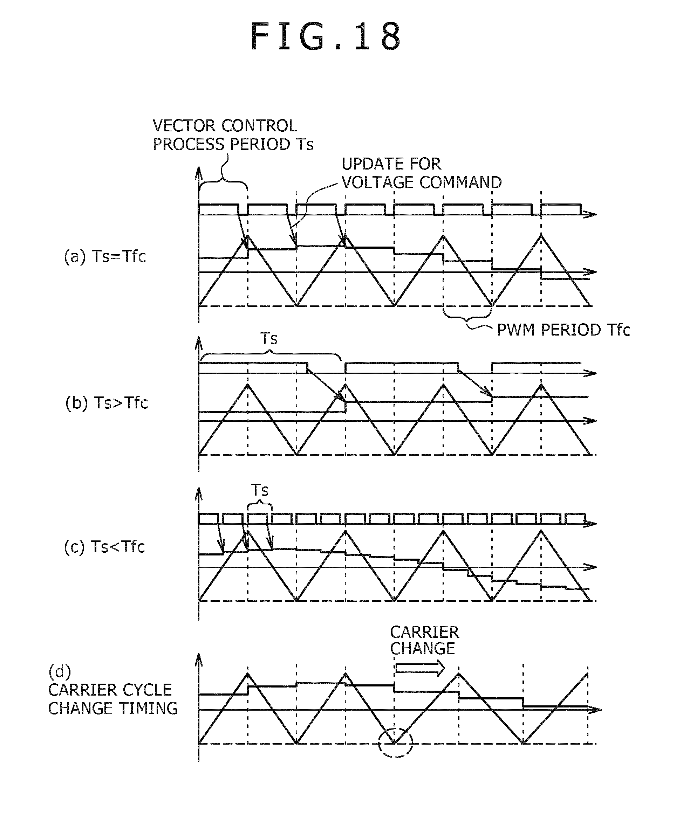

The relation of these processing periods Ts and Tfc is shown in Fig. 18(a) through (c). Fig. 18(a) is the condition for Ts = Tfc. This relation is preferably understood for control purposes by considering the half-cycle of the carrier wave as the PWM minimum unit. However, though the processing period Ts for vector control is a value determined by the relation between system response time and stability; the upper threshold of the carrier frequency is determined by the switching device utilized in the converter, or is made a harmonic in order to avoid audible noise generated along with the switching so the processing period Ts and the carrier frequency do not always match one another.

Fig. 18(b) is the condition for TS>Tfc. In this case, the vector control calculation results are reflected every several carrier half-cycles. Mainly factors such as magnetic noise become a problem and Fig. 18(b) is the condition utilized if setting the carrier frequency to a non-audible range (16kHz or higher).

Fig. 18(c) is the condition for TS<Tfc. This figure shows the condition utilized when the carrier frequency does not rise due to the performance of the switching device. However achieving the condition in Fig. 18(c) is difficult on an ordinary microcomputer and requires dedicated gate logic. Patent document 2 is an invention relating to the condition in Fig. 18(c).

The carrier frequency $\omega$fc can be changed by varying the counter setting so that the settings are typically changed at the point in time that the up-count begins as shown in Fig. 18(d). This function can be set via a general-purpose microcomputer function.

In drive systems for handling large-capacity motors, as shown in the AC motor 5 for railway cars, the carrier frequency cannot be set to a higher frequency so the method in Fig. 18(a) is normally utilized. In this case, the change in the carrier frequency can be made at each carrier cycle and so can be matched with the synchronous PWM. However, the vector calculation period also becomes longer simultaneous with the lowering of the carrier frequency so that stabilizing the system becomes difficult. Making a setting according to Fig. 18(c) will shorten the calculation processing period but achieving synchronous PWM will be impossible without making other changes.

An object of the present invention is to provide a drive system for AC motors capable of improving control performance in AC motors in power converters having good efficiency that are set to a low carrier frequency.

The present invention is capable of resolving the aforementioned issues by way of a drive system for an AC motor including a 3-phase AC motor, an inverter for driving the applicable motor, and also a controller for driving the inverter by pulse width modulation; and that includes a means to carry out pulse width modulation by calculating the carrier wave for performing pulse width modulation simultaneously with calculating the fundamental wave phase to the motor based on the instantaneous value of the frequency command of the motor calculated by the controller, and comparing the carrier wave with the fundamental wave.

The present invention is capable of the AC motor with a high level of response without raising the carrier frequency and further without increasing the unneeded harmonic components. Other objectives of the present invention will be clearly specified in the following description.

Brief Description of the Drawings

Fig. 1 is a block diagram expressing the structure of the motor drive system relating to the first embodiment of the present invention;

Fig. 2 is a graph showing the ratio of carrier frequency to drive frequency during pulse width modulation;

Fig. 3 is a drawing showing the relation of the voltage command and carrier wave relating to the first embodiment of the present invention;

Fig. 4 is a comparison chart showing the linear voltage waveform during pulse switching in the method of the related art, and the first embodiment of the present invention;

Fig. 5 is a block diagram expressing the structure of the PWM processor unit relating to the second embodiment of the present invention;

Fig. 6 is graphs showing a comparison of results relating to the second embodiment of the present invention;

Fig. 7 is a block diagram expressing the structure of the vector control unit and the PWM processor unit relating to the third embodiment of the present invention;

Fig. 8 is a diagram showing the waveform operation relating to the third embodiment of the present invention;

Fig. 9 is a block diagram expressing the structure of the vector control unit relating to the fourth embodiment of the present invention;

Fig. 10 is drawings showing the carrier frequency and synchronizing conditions for synchronous PWM;

Fig. 11 is a block diagram expressing the structure of the designated harmonic suppressor unit relating to the fourth embodiment of the present invention;

Fig. 12 is a block diagram expressing the structure of the PWM processor unit relating to the fifth embodiment of the present invention;

Fig. 13 is a drawing showing the PWM waveform relating to the fifth embodiment of the present invention;

Fig. 14 is a descriptive drawing showing the AC motor drive system relating to the sixth embodiment of the present invention;

Fig. 15 is a descriptive drawing showing the AC motor drive system relating to the sixth embodiment of the present invention;

Fig. 16 is a concept view drawing of the AC motor drive system utilized in the railway car relating to the sixth embodiment of the present invention;

Fig. 17 is a block diagram expressing the structure of the AC motor drive system in the related art; and

Fig. 18 is drawings showing the relation of the carrier wave and the vector control calculation period in the related art.

Detailed Description

The AC motor drive system of the embodiment of the present invention including a 3-phase AC motor, an inverter for driving the applicable motor, and a controller for driving the inverter by pulse width modulation; and in which the AC motor drive system switches the pulse count of the pulse voltage generated by pulse width modulation in integer multiples, and switches the drive voltage of the AC motor to an optional phase before and after the applicable switching.

The AC motor drive system of the embodiment of the present invention including a 3-phase AC motor, an inverter for driving the applicable motor, and a controller for driving the inverter by pulse width modulation; and in which the AC motor drive system preferably includes a means to perform pulse width modulation by both calculating the carrier wave for carrying out pulse width modulation, and calculating the fundamental wave phase to the motor based on the instantaneous frequency command value of the motor calculated by the controller; and also calculating so that the frequency of the carrier wave becomes an integer multiple of the frequency command value of the motor.

The AC motor drive system of the embodiment of the present invention including a 3-phase AC motor, an inverter for driving the applicable motor, and a controller for driving the inverter by pulse width modulation; and in which the calculation processing in the controller for at least one of either the voltage applied to the motor or the frequency, is calculated within the first calculation processing period; and the phase calculation for the motor, and also the calculation of the carrier wave for performing pulse width modulation are carried out in the second calculation processing period based on the applicable calculation results; and the second calculation processing period is preferably set shorter than the first second calculation processing period.

The AC motor drive system of the embodiment of the present invention including a 3-phase AC motor, an inverter driving the applicable motor, and a controller for driving the inverter by pulse width modulation; and in which the calculation processing in the controller for at least one of either the voltage applied to the motor or the frequency is calculated within the first calculation processing period; and the phase calculation for the motor, and also the calculation of the carrier wave for performing pulse width modulation are carried out in the second calculation processing period based on the applicable calculation results; and the AC motor drive system preferably contains a means for comparing the phase calculation results for the motor with the calculation results for the carrier wave in the second calculation processing, and synchronizing both phases.

The AC motor drive system of the embodiment of the present invention including a 3-phase AC motor, an inverter for driving the applicable motor, and a controller for driving the inverter by pulse width modulation; and in which the calculation processing in the controller for at least one of either the voltage applied to the motor or the frequency, is calculated within the first calculation processing period; and the phase calculation for the motor, and also the calculation of the carrier wave for performing pulse width modulation are carried out in the second calculation processing period based on the applicable calculation results; and also including a means in the second calculation processing period to generate an interrupt signal at a timing from dividing the carrier wave period by an integer, and preferably at a timing to execute the first calculation processing based on the applicable interrupt signal.

The AC motor drive system of the embodiment of the present invention further includes a means to detect electrical current flowing in the motor, and preferably includes a current control process to suppress the designated harmonic contained in the applicable detection value.

The AC motor drive system of the embodiment of the present invention preferably further includes a third-order component in the drive frequency of the motor, as the designated harmonic component contained in the applicable detection value.

The AC motor drive system of the embodiment of the present invention including a 3-phase AC motor, an inverter for driving the applicable motor, and a controller for driving the inverter by pulse width modulation; and in which the AC motor drive system preferably includes a means to perform pulse modulation by calculating the fundamental wave phase to the motor based on at least one among either the frequency and the voltage applied to the motor by the controller, and calculating the output pulse count and the amplitude of the inverter from the applicable calculation results.

The AC motor drive system of the embodiment of the present invention further preferably includes a one-chip processor containing the controller functions, and the usage of those functions in the drive system.

The electric motorized vehicle of the embodiment of the present invention preferably includes the AC motor drive system.

First Embodiment

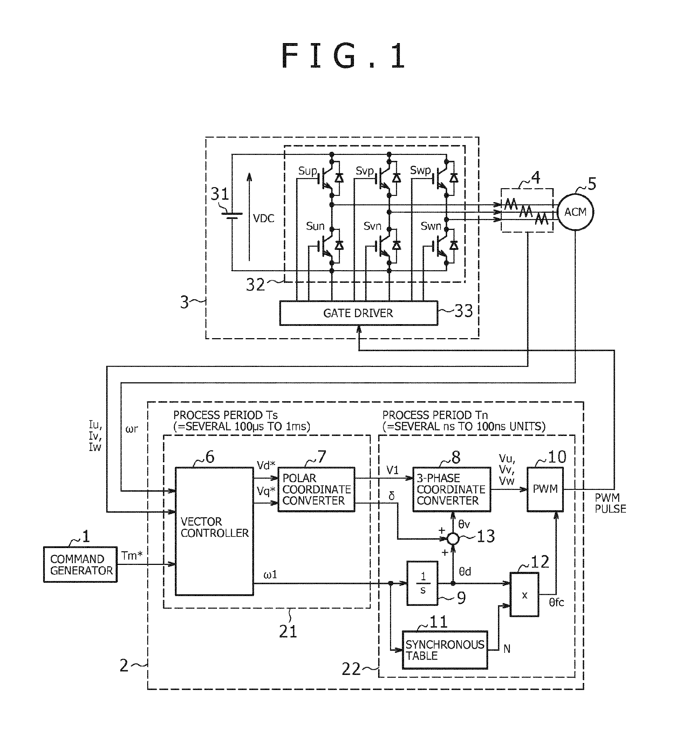

The first embodiment of the present invention is described next while referring to Fig. 1 through Fig. 4. The motor drive system in Fig. 1 drives the AC motor 5. The structural elements in Fig. 1 include a command generator 1 to generate a torque command Tm* for the AC motor 5, a controller 2 to carry out control to generate torque matching the torque command Tm*, an inverter 3 to drive the AC motor 5, and a current sensor 4 to detect the current flowing in the AC motor 5.

The inverter 3 is comprised of a direct current power supply 31 that supplies electrical power to the inverter; an inverter main circuit unit 32 comprised of the six switching elements Sup through Swn, and the gate driver 33 to directly drive the inverter main circuit unit 32.

The command generator 1 is a controller ranking above the controller 2, and that generates a torque command Tm* for the AC motor 5. The controller 2 regulates the torque generated by the AC motor 5 based on the torque command from the command generator 1. The controller 2 internally contains a vector control unit 21 and a PWM processor unit 22.

The vector control unit 6 within the vector control unit 21 internally divides the 3-phase alternating current Iu, Iv, Iw which are AC detection values for the AC motor 5 into a torque current component (q axial current component) and an excitation current component (d axial current component) and performs current control on each component. The current control results, the voltage command Vd* and Vq* on the dq axis that serves as the rotary coordinate axis are calculated, and converted by the polar coordinate converter 7 into the voltage amplitude command V1 and the voltage phase command $\delta$. The vector controller 6 also calculates the drive frequency $\omega 1$ of the AC motor 5, and outputs that drive frequency $\omega 1$ to the PWM processor unit 22.

The coordinate-converted V1 (voltage amplitude command), and the $\delta$ (voltage phase command), the drive frequency $\omega 1$ are input into the PWM processor unit 22 to perform PWM. The integrator 9 integrates the drive frequency $\omega 1$, and calculates the control phase $\theta d$. Moreover, an adder 13 adds the voltage phase command $\delta$ to the $\theta d$, and the 3-phase coordinate converter 8 obtains the three-phase AC current command voltages Vu, Vv, Vw as the voltage phase $\theta v$.

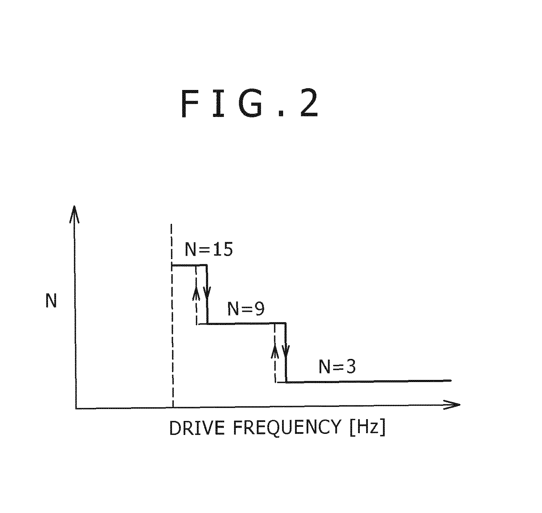

In the synchronous table 11, the N ($=\omega 1/\omega fc$) which is the ratio of the carrier frequency to the drive frequency is determined based on the size of $\omega 1$. The N value for $\omega 1$ for example is mapped in the synchronous table 11 as shown in Fig. 2. Hysteresis is normally provided to prevent flopping in the vicinity of the switching. The multiplier 12 multiplies the N that is referred to in synchronous table 11, by $\theta d$ to obtain the phase $\theta fc$ of the carrier wave. The $\theta d$ and $\theta fc$ consequently then have the relation of a constant multiple of N ($\theta fc = N \cdot \theta d$).

The PWM pulse generator 10 generates a triangle wave from the phase $\theta fc$ of the carrier wave and compares its size with the size of the three-phase AC command voltages Vu, Vv, Vw and implements pulse width modulation. The PWM pulse generator 10 compares the carrier wave with the 3-phase AC current command and outputs a PWM waveform.

The operation of the controller 2 is as follows. The vector control unit 21 regulates the d axis and q axis current so that the AC motor 5 generates a torque matching the torque command Tm*. This calculation processing period is set as Ts. The PWM processor unit 22 consequently performs pulse width modulation based on the obtained voltage commands V1, $\delta$, and the drive frequency $\omega 1$. This calculation processing period is set as Tn. The Tn processing period is here set as several n to several hundred ns. This processing period is the same level as the counter units of the related art and the most unique feature of the present invention. This function by the PWM processor unit 22 must itself be rendered as internal hardware in order to be implemented on a general-purpose microcomputer however this function can be achieved even without using a microcomputer by utilizing an FPGA (Field Programmable Gate Array) or ASIC (Application Specific Integrated Circuit.

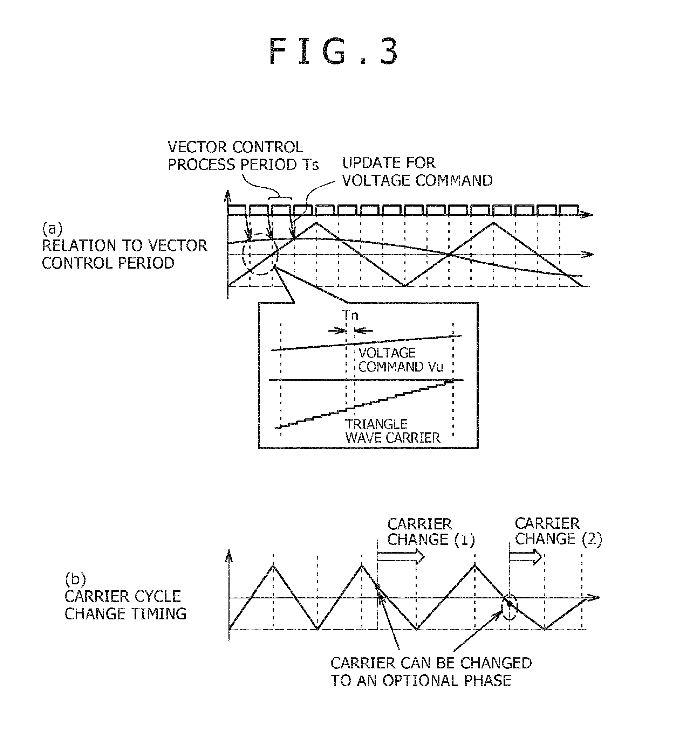

This PWM processor unit 22 simultaneously calculates both the fundamental wave phase $\theta d$, and the phase $\theta fc$ of the carrier wave based on the frequency command $\omega 1$. Namely, the relation between the drive frequency and carrier frequency will always be maintained in constant multiple of N no matter at what timing the $\omega 1$ changes. This operation is described while referring to Fig. 3.

Fig. 3(a) shows the relation between the U phase of the voltage command Vu and carrier wave, and also the vector calculation process period Ts. The Ts rewrites the voltage command V1 and $\delta$ in lengths where the carrier cycle is 8 segments. The PWM processor unit 22 receives that rewritten command V1 and $\delta$ and performs processing in Tn periods. The voltage command Vu and also the carrier wave are consequently rewritten in Tn units as shown within the same figure. If for example the synchronous PWM conditions change at this time and the N value has changed, then a carrier change such as shown in Fig. 3(b) occurs. The carrier wave is instantaneously rewritten due to the change in the drive frequency so that the changes are utilized without delay. The response of the control system is in this way improved and a more stable drive system can be achieved.

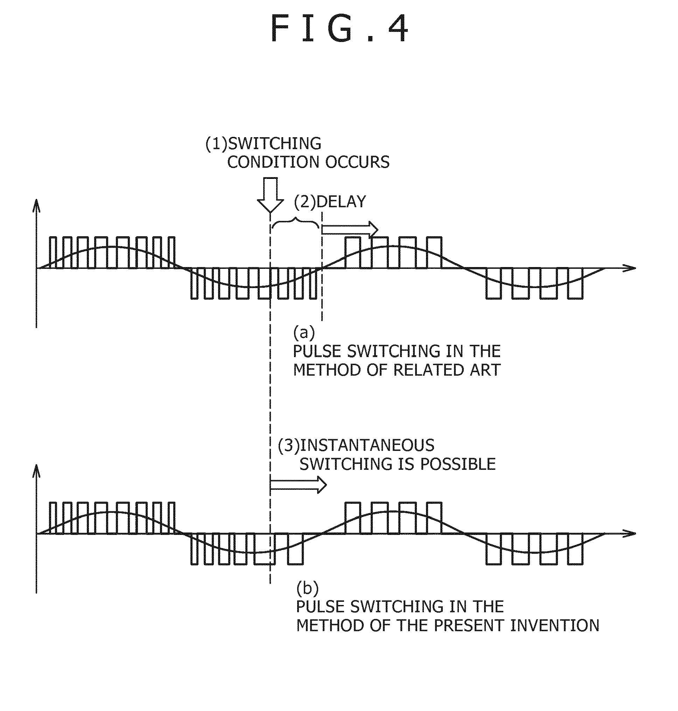

Fig. 4 shows the linear voltage waveform of the method of the related art ((a) in same figure) and of the present invention ((b) in same figure). Switching the synchronous condition in the related art required that the fundamental wave and carrier phase conditions matched each other and so was switching that required taking the symmetry of the waveform into account. The method of the present invention however allows switching with no problems regardless of the waveform phase conditions. A drive system for the AC motor 5 can therefore be achieved that provides higher response.

Second Embodiment

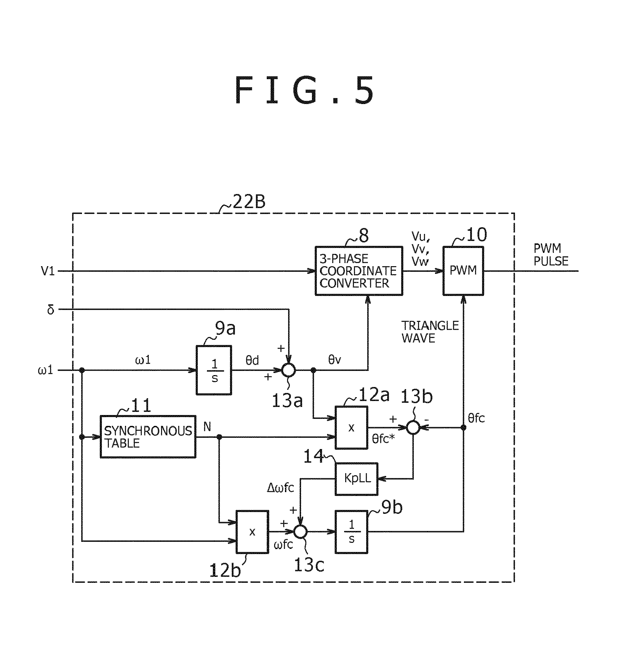

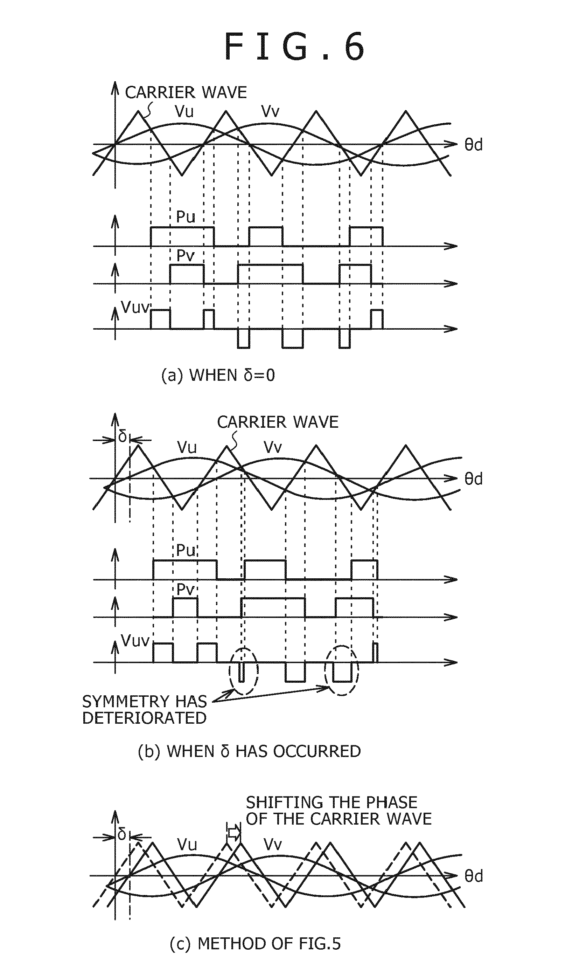

The second embodiment of the present invention is described next while referring to Fig. 5 and Fig. 6. In the first embodiment, a drive system for the AC motor 5 was described where the frequency of the fundamental wave and frequency of the carrier wave instantaneously became an N multiple. In contrast, the second embodiment is aimed at matching the phase of the fundamental wave with the phase of the carrier wave.

Fig. 5 is a block diagram of the PWM processor unit 22B in the second embodiment of the present invention. In the figure, the part numbers 8, 10, 11 are the same numbers as in Fig. 1 for the first embodiment. The second embodiment is implemented by utilizing this PWM processor unit 22B instead of the processor unit 22 of Fig. 1.

In Fig. 5, an integrator 9a integrates the $\omega 1$ and calculates the control phase $\theta d$, and the voltage phase command $\delta$ is added to the $\theta d$ and set as the voltage phase $\theta v$. The multiplier 12a multiplies the N output from the synchronous table 11 by this $\theta v$ to set command $\theta fc*$ of the carrier wave phase. To generate the carrier wave, the multiplier 12b makes $\omega 1$ an N multiple (increased N times) to create the carrier frequency $\omega fc$, and the integrator 9b integrates that carrier frequency $\omega fc$ to produce the carrier phase $\theta fc$.

The subtractor 13b calculates the difference between the carrier phase $\theta fc$ and the carrier phase command θfc* to find the deviation, and the proportional gain 14 implements proportional control on that deviation. The adder 13c adds the output from the proportional gain 14 to input to the integrator 9b as a carrier frequency compensation quantity. The proportional gain 14 continues adding the compensation quantity to the carrier frequency ωfc as long as there is a deviation between the θfc and θfc*, and when both are a match, the compensation quantity reaches zero.

The operation of the present embodiment is described next. In the first embodiment of Fig. 1, one integrator 9 carried out phase calculation of the carrier wave and fundamental wave. However the phase of the fundamental wave changes due to fluctuations in the δ which is the voltage phase command. As shown in Fig. 6(a) and (b), the symmetry of the pulse waveform deteriorates due to effects from δ (the Vuv which is the line voltage waveform changes).

The AC motor 5 can be driven even by the waveform in Fig. 6(b), however the specified content of the harmonic (high frequency) wave might greatly change which is not desirable. The carrier wave must be synchronized with the voltage phase θv to maintain the waveform. The second embodiment accomplishes this synchronization.

In the second embodiment as shown in Fig. 5, the integrators 9a, 9b are respectively provided for the fundamental wave and the carrier wave and both are subjected to phase calculation. Both have an N multiple (N times) as the ratio the same as before, and are satisfied for the synchronous PWM condition. However, in order to achieve symmetry in the waveform phase relation, the phase command θfc* of the carrier wave is calculated based on θv, and feedback control applied so the difference with that value reaches zero. The proportional gain 14 applies the feedback. The output of the proportional gain 14 which is Δωfc, reaches zero at the instant that θfc* matches θfc.

Consequently, the carrier wave is constantly controlled so that the carrier wave matches the voltage phase θv as shown in Fig. 6(c). The second embodiment of the present invention is therefore capable of achieving synchronous PWM in a constant operation with a symmetrical waveform of the smallest harmonic while simultaneously allowing swift changes in synchronizing conditions relative to instantaneous changes in the voltage command.

Third Embodiment

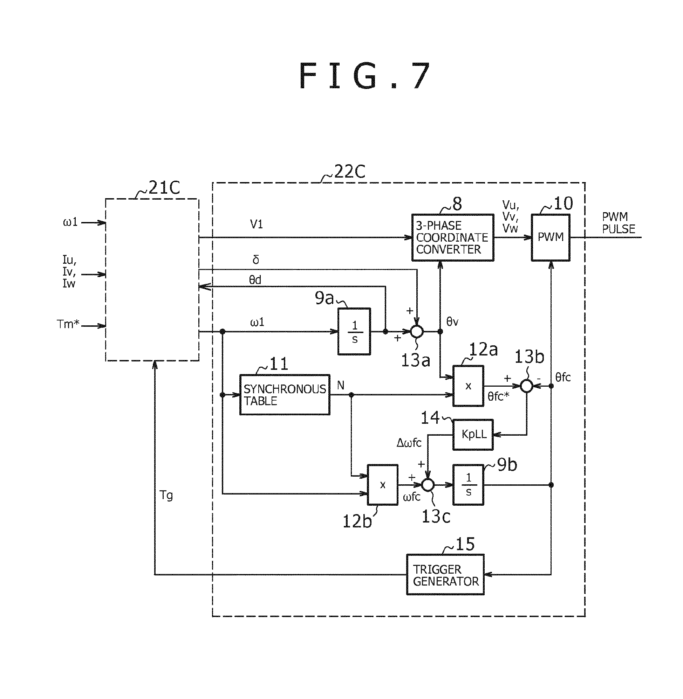

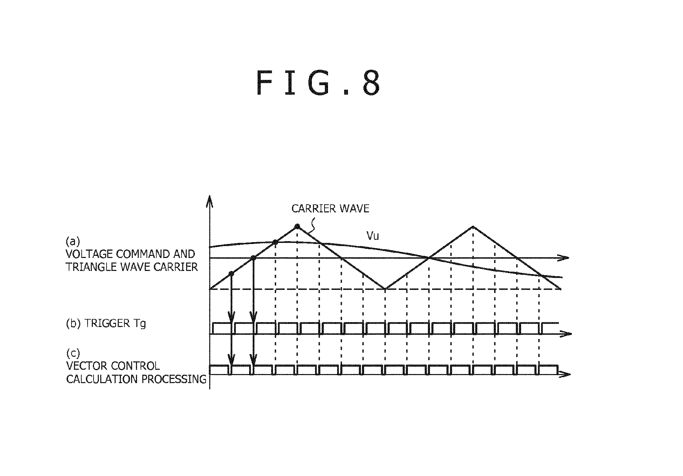

The third embodiment of the present invention is described next while referring to Fig. 7 and Fig. 8. In the first embodiment and second embodiment, an AC motor 5 was described where the frequency of the fundamental phase and the frequency of the carrier wave instantaneously reach an N multiple (increased N times). In those cases no particular consideration was given to achieving synchronization between the calculation processing period for the vector control unit 21 and the calculation processing period for the PWM processing unit 22, however actually achieving synchronization boosts the controllability. The method for boosting controllability is described in the third embodiment.

Fig. 7 is a block diagram of the structure of the vector control unit 21C and the PWM processor unit 22C for the third embodiment of the present invention. In the figure, the part numbers 8, 9a, 9b, 10, 11, 12a through c, 13a through c, and 14 are the same numbers as in Fig. 1 and Fig. 5 of the first embodiment and the second embodiment. The third embodiment is achieved by utilizing the vector control unit 21C and also the PWM processor unit 22C instead of the vector control unit 21 and the PWM processor unit 22 in Fig. 1.

The newly added part in Fig. 7 is the trigger generator 15. The trigger generator 15 generates a signal serving as the trigger at a timing at which one cycle of the carrier wave θfc is subdivided by an integer. More specifically, a trigger signal can be generated by the comparator comparing the sizes of the θfc. Fig. 8 shows the relation between the carrier wave and the trigger signal.

Fig. 8(a) shows the carrier wave and voltage command Vu, and shows the triggers signal Tg generated at a timing in which the carrier wave is divided into eighths. This trigger signal Tg is input to the vector calculation unit 21C as an interrupt signal and the vector calculation processing then started via this signal. The vector is in this way calculated in processing that calculates the carrier wave cycle in integer periods.

Even assuming that the carrier wave and vector calculation process cannot be synchronized with each other, a beat phenomenon can be made to occur by way of the asynchronous offset between the carrier wave and vector calculation process period. The AC motor includes harmonics that are integer multiples of the carrier frequency and so current sampling that accounts for the periodicity of these harmonics is indispensable. Ignoring this periodicity may cause the problem of beat phenomenon and aliases to occur. Therefore, generating the process timing of the vector control unit 21C based on the carrier wave as in the present invention proves exceedingly effective.

The vector control unit 21C must implement control to convert the phase currents Iu, Iv, Iw into dq coordinates. Performing coordinate conversion requires utilizing the phase θd in the PWM processor unit 22C. The present embodiment is configured to return the θd value to the vector control unit 21C.

The present embodiment as described above is therefore capable of achieving synchronous PWM in a constant operation with a symmetrical waveform of the smallest harmonic while simultaneously allowing swift changes in synchronizing conditions relative to instantaneous changes in the voltage command. The present embodiment moreover achieves a drive system for an AC motor 5 that is capable of avoiding the beat phenomenon that accompanies sampling.

Fourth Embodiment

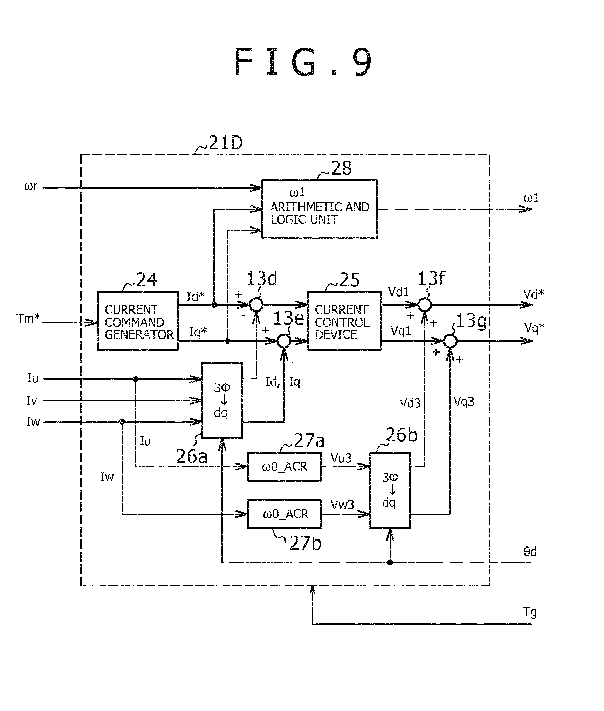

The fourth embodiment of the present invention is described next while referring to Fig. 9 through Fig.11. A special feature of the fourth embodiment is the vector control unit and also the reduction of the harmonic components generated by the inverter 3.

Fig. 9 is a block diagram showing the structure of the vector control unit 21D of the fourth embodiment of the present invention. The vector control unit 21D in Fig. 9 includes a current command generator 24, a current controller unit 25, a dq coordinate converter 26a, designated harmonic suppressor units 27a, 27b, a coordinate converter 26b, the adders 13f, 13g, and a $\omega1$ arithmetic and logic unit 28.

The current command generator 24 receives the torque command Tm*, and calculates the excitation current command Id* and torque current command Iq* of the AC motor 5 (here an induction motor is used an example). The subtractors 13d and 13e calculate the deviation between the Id* and the Iq*, and the d axis current Id and q axis current Iq of the actual electric motor. The current controller unit 25 performs control calculations to eliminate the deviation between these currents, and calculates the voltage command Vd1 and also the Vq1 on the dq axis.

The dq coordinate converter 26a converts the phase current detection values Iu, Iv, Iw of the electric motor into coordinates by way of control phase $\theta d$, into Id and Iq which are values on the dq axis. The designated harmonic suppressor units 27a, 27b possess sensitivity only to designated higher order harmonic components contained in the phase current and reduce those harmonics. The coordinate converter 26b converts the outputs Vu3, Vw3 of these designated harmonic suppressor units by dq coordinate conversion into Vd3, Vq3 on the dq axis. The adders 13f, 13g respectively add Vd3, Vq3 and Vd1, Vq1, and calculate the voltage command Vd*, and Vq* on the dq axis. The $\omega1$ arithmetic and logic unit 28 performs sliding calculation of the motor (induction motor) from the drive frequency $\omega r$ of the motor, and the current commands Id*, Iq*, and calculates the drive frequency $\omega1$ of the motor.

Except for the designated harmonic suppressor units 27a, 27b, and the dq coordinate converter 26b for the output of suppressor units 27a, 27b, the structure of the vector control unit 21D is that of the vector control unit 6 for ordinary induction motors. The current command generator 24 usually makes a Iq* that is proportional to the torque command Tm*. The Id* is applied at a fixed level regardless of the Tm* and maintains the excitation flux at a fixed level. The torque is proportional to the Iq.

There are some cases where the excitation current is also controlled but such cases are not directly related to the content of the present invention so a description is omitted. Each dq current component is controlled by the current controller unit 25 so as to match each command. In the case of an induction motor, the sliding frequency must be set as needed according to the torque and so the $\omega1$ arithmetic and logic unit 28 adds the sliding frequency component to the rotation speed $\omega r$ and calculates the drive frequency $\omega1$.

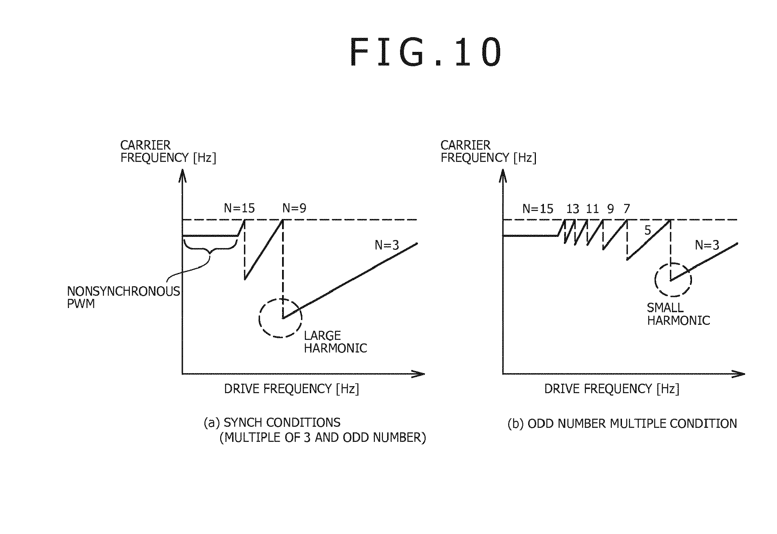

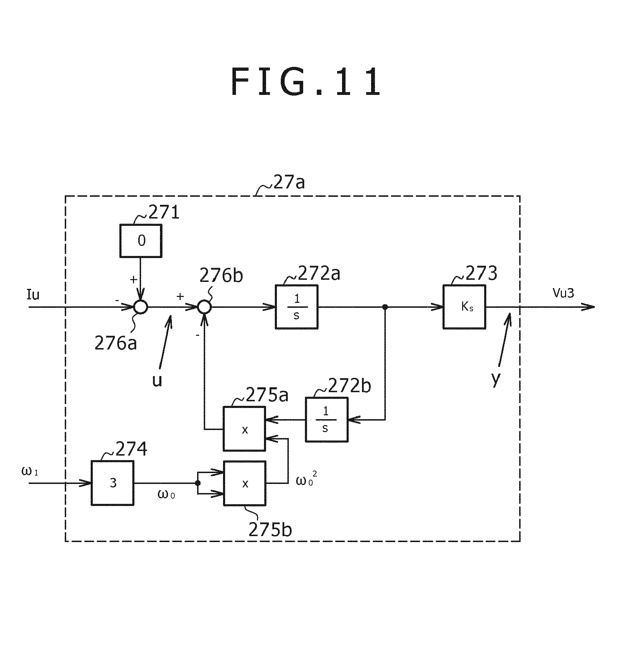

The operation of the unique section of the designated harmonic suppressor units 27a, 27b of the present invention is described next while referring to Fig. 10 and Fig. 11. In large-capacity power converters such as inverters for railway cars, synchronous PWM is employed as already described since the carrier frequency cannot be set high. The synchronous PWM is switched according to the drive frequency $\omega1$ utilizing the synchronous table 11 as shown for example in Fig. 2. Rewriting the map as shown in Fig. 2 to substitute the carrier frequency onto the vertical axis, gives a result such as in Fig. 10(a).

The carrier frequency and the ratio N of the drive frequency are set to "N=3, 9, 15..." and so on under the restricting condition of "a multiple of 3 and also odd number." In the case of N > 15, the state is largely asynchronous PWM and not termed a problem, however if N is 15 or less then the beat phenomenon will occur unless synchronous PWM is utilized. In the synchronous condition of "a multiple of 3 and also odd number":

(1) A multiple of 3 is required in order to make the three phase waveform symmetric

(2) If an even multiple is used then the symmetry of each phase will deteriorate, and second or fourth-order even harmonics will occur.

The problem in (2) of even harmonics and in particular second harmonics should be avoided as much as possible due to the large effect exerted on the torque. Moreover, ignoring the multiple of 3 in (1) will also make the third phase waveform asymmetric, and cause a third-order harmonic in each phase that also becomes a problem. The switched pattern as shown in Fig. 2 or Fig. 10(a) will therefore be unavoidable. However, the switching after N=15 is N=9, and immediately afterwards the harmonic increases as much as 1.7 times. Moreover when switching from N=9 to N=3, the harmonic content rate will increase as much as three times. There is therefore a high probability of problems such as motor heat emissions or an increase in electromagnetic noise or inductive interference due to harmonic loss in the vicinity of this switching.

Ignoring the above condition (1) and generating the synchronous table 11 in the "odd multiple" condition will result in a state as in Fig. 10(b). In this case, the harmonics in the vicinity of the N switching have been greatly reduced but a third-order harmonic has occurred.

Whereupon in the embodiment of the present invention, the synchronous table 11 is set to "odd multiple" in Fig. 10(b) and the designated harmonic suppressor units 27a, 27b are utilized to eliminate the third-order harmonic. A block diagram of the structure is shown in Fig. 11.

The zero command generator 271 generates a command value for controlling the harmonic to zero as shown in Fig. 11, and the subtractor 276a calculates the difference between this command value and the phase current (here, the U phase current Iu). The integrators 272a, 272b, the sine wave gain 273, the threefold gain 274, the multipliers 275a, 275b, and the subtractor 276b in the figure are structural components in the block diagram for setting the third harmonic of the drive frequency $\omega 1$ to zero.

Calculating the transfer function between the "u" and output "y" shown by the arrows in Fig. 11 yields:

$$G = y/u = (K_s \cdot s)/(s^2 + \omega_0{}^2) \ \ldots \ (Formula \ 1)$$

This transfer function can be seen to have a gain of infinity for $s=j\omega O$. This transfer function therefore operates as a controller possessing sensitivity to the $\omega 0$ component. The $\omega 0$ is here set to three times the amount of $\omega 1$, and the zero command generator 271 applies a command so that this component attains zero.

In other words, the third-order component of the phase current can be eliminated by providing the designated harmonic suppressor units 27a, 27b as shown in Fig. 9. This type of control is possible because the calculation period of the vector control unit 21 can be set to a short period relative to the carrier cycle. In the "Ts=Tfc" condition shown in the example of the related art, a large phase delay occurs in the third-order harmonic so that a harmonic suppression effect cannot be obtained even if employing this type of control. So the capability to achieve this type of control is a unique feature of the present invention.

The third-order harmonic can therefore be suppressed by utilizing the vector control unit 21D as shown in Fig. 9, even if synchronous conditions are set for other than a third multiple, such as N=5, 7, 11, and 13, etc. The overall size of the harmonic component can be drastically reduced since the synchronous conditions can be set to a fine range.

Fifth Embodiment

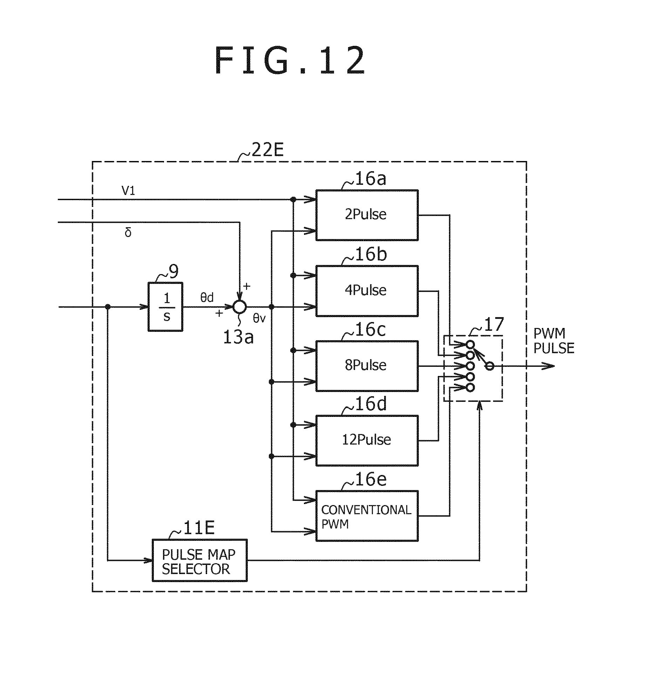

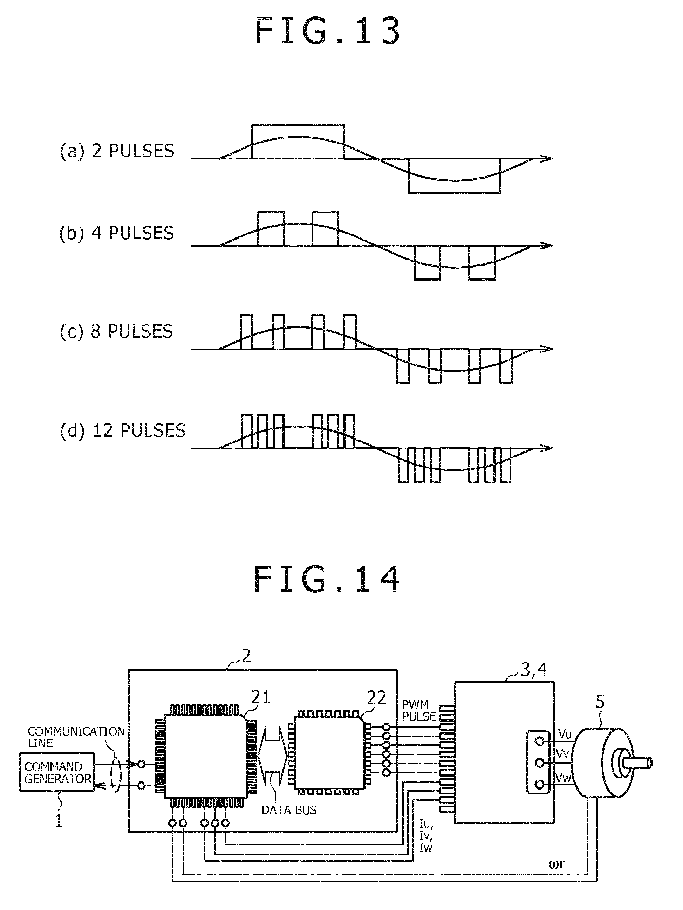

The fifth embodiment of the present invention is described next while referring to Fig. 12 and Fig. 13. A feature of the fifth embodiment is the PWM processor unit 22 which is capable of further reducing harmonic components generated by the inverter 3.

Fig. 12 is a block diagram of the structure of the PWM processor unit 22E relating to the fifth embodiment of the present invention. In the figure, the integrator 9 integrates the frequency command $\omega 1$ to find the control phase $\theta d$, and also adds the voltage phase command $\delta$ to calculate the $\theta r$. The pulses for $\theta v$ are calculated by way of the pulse maps 16a through 16d based on this $\theta v$. In the present embodiment, the relation between the voltage phase $\theta v$ and output pulses are mapped beforehand on the pulse maps 16a through 16d or treated via functions, and prepared as plural units. The pulse map selector 11E decides which pulse map among 16a through 16b to utilize and does switching via the switch 17. If the size of the $\omega 1$ is smaller than the specified value, then the normal asynchronous PWM generator 16e is selected.

If driving a motor in the present embodiment the number of pulses can be sequentially switched according to the drive frequency. The embodiments thus far have described PWM that is based on triangle wave comparison however the present invention is also capable of executing this type of PWM scheme. Generally, reducing the number of pulses during PWM control causes deterioration via the distortion rate so that first of all finding to what extent to suppress which harmonic by calculation and mapping is sometimes better than using PWM by triangle wave comparison. In systems in particular when inductive interference from harmonics becomes a problem, controlling the frequency at which that harmonic is generated is essential and utilizing mapping is more practical in such cases.

The fifth embodiment of the present invention is therefore capable of providing a drive system for AC motors that can suppress the harmonic component while still maintaining the control response.

Sixth Embodiment

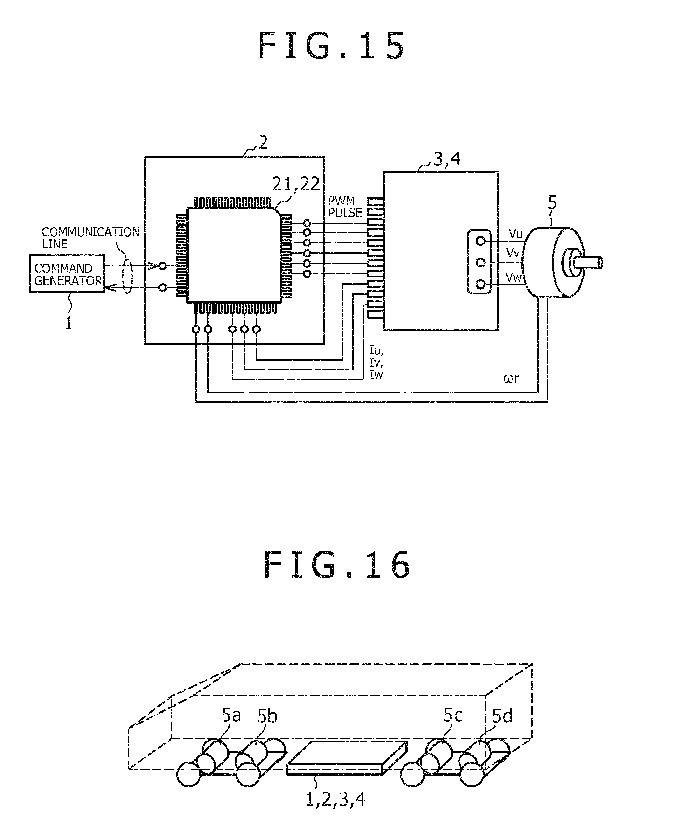

The sixth embodiment of the present invention is described next. A specific example of the structure of the drive system for the AC motor of the present invention is shown in Fig. 14 through Fig. 16. Fig. 14 and Fig. 15 are respectively drawings showing the components of the sixth embodiment by way of an actual system.

A 16 to 32 bit class microcomputer is utilized for the vector control unit 21 in Fig. 14, and the vector control unit 21 utilizes that microcomputer and the PWM processor unit 22 as a data bus (or a general-purpose port) to exchange data. The PWM processor unit 22 utilizes CPLD or FPGA and may also utilize ASIC in the mass produced product.

Moreover the functions of the PWM processor unit 22 may in the future also be incorporated as hardware into the microcomputer and an example is shown in Fig. 15. There is also no problem whatsoever with incorporating the vector control unit 21 into FGPA or ASIC devices.

Fig. 16 is a drawing of the drive system for the AC motor of the above embodiments applied to railway cars. The capacity of the motor in the railway car is large at 100 kilowatts or more and a high carrier frequency cannot be set. Moreover, the synchronous PWM system of the related art is limited in terms of how high a motor control response can be provided. Applying the present invention attains a high-response AC motor that does not increase harmonic components and further without increasing the converter loss.

The embodiments of the present invention were described above. The embodiments were described utilizing induction machines as examples of AC motors for facilitating the description, however the present invention is also applicable in the same way to other motors if alternating current motors. The invention also applies in the same way for synchronous machines in the form for example of permanent magnet synchronous motors, winding type synchronous motors, and reluctance torque type synchronous machines. The invention is also applicable in the same way to the control of generators.

Synchronous PWM was described in the embodiments as performed over the entire speed range however there are no problems such as the beat phenomenon in the low speed range, and so there is no problem with employing asynchronous PWM to clamp the carrier frequency.

The present invention is drive system technology for large-capacity AC motors as was already described. The main scope of applications for this system is railway cars, general industrial equipment, wind-powered generators and diesel generator systems, etc. The present invention will prove effective as a system capable of achieving both high efficiency and high response.

The present invention is not limited to the above described embodiments and may include all manner of variations. The embodiments of the present invention were for example described in detail in order to make the invention easy to understand, however the present invention is not necessarily limited to containing all of the described structures.

Moreover, a portion of the structure of an embodiment can be substituted into the structure of another embodiment. The structure of an embodiment can also for example be added to a particular embodiment. Portions of the structure of each embodiment can also be added, deleted, or substituted with portions of the structure of other embodiments.

A portion or all of the above described structures, functions, processor units, and processing routines and so on may also be implemented as hardware such as by design as an integrated circuit. Also each of the above described structures and functions and so on may be interpreted into programs whose respective functions are implemented by processors. The information for the programs, tables, files and so on for implementing each function may be placed in a storage device such as a memory, or hard disk, or SSD (Solid State Drive) and so on or may be placed on a recording medium such as an IC card, a SD card, or a DVD, etc.

The control lines and information lines considered necessary for the description were shown above. However the description does not necessarily show all control lines and information lines contained in the product. All of the structures may in fact be considered as mutually connected.

**Claims**

1. A drive system including a three-phase alternating current motor, an inverter to drive the motor, and a controller to drive the inverter by pulse width modulation,
   wherein the number of pulses of the pulse voltage generated by the pulse width modulation switches in integer multiples, and the switching is performed at a variable phase relative to the drive voltage of the alternating current motor.

2. The drive system for an alternating current motor according to claim 1,
   wherein the controller calculates both the fundamental wave phase to the motor, and the phase of the carrier wave for performing pulse width modulation based on the instantaneous value of the frequency command of the motor calculated based on the torque command, and performs pulse width modulation based on the fundamental wave phase and the carrier wave phase.

3. The drive system for an alternating current motor according to claim 2,
   wherein the controller calculates the phase of the carrier wave so as to attain an integer multiple of the fundamental wave phase.

4. The drive system for an alternating current motor according to claim 2 or claim 3,

wherein the controller performs calculation processing of at least one of either the apply voltage command to the motor and the frequency command in the first calculation processing; and based on the first calculation results, performs the calculation of the fundamental wave phase to the motor and the calculation of the carrier wave phase by utilizing a second calculation processing whose processing cycle is shorter than the first calculation processing.

5. The drive system for an alternating current motor according to claim 4,
wherein the controller includes a means for comparing the calculation results for the phase of the carrier wave, with the calculation results for the phase of the fundamental wave of the motor within the second calculation processing, and synchronize both phases.

6. The drive system for an alternating current motor according to claim 4 or claim 5,
wherein the controller includes a means for generating an interrupt signal at a timing where the carrier frequency cycle is subdivided by an integer within the second calculation processing, and set a timing to execute the first calculation processing based on the interrupt signal.

7. The drive system for an alternating current motor according to claim 2 or claim 3,
wherein the controller includes a means for performing pulse width modulation by calculating the fundamental wave phase to the motor based on at least one value among either the apply voltage command to the motor and the frequency command, and calculating the number of output pulses of inverter and also the amplitude from the calculation results.

8. The drive system for an alternating current motor according to any one of claims 1 to 7, including
a means for detecting current flowing in the motor; and
a current control processor unit to suppress a specific harmonic included in the detection value.

9. The drive system for an alternating current motor according to claim 8,
wherein the current control processor unit suppresses the third-order component of the drive frequency of the motor as the specific harmonic component contained in the detection value.

10. The drive system for an alternating current motor according to any one of claims 1 to 9,
wherein the functions of the controller are stored on a one-chip processor and that one-chip processor is utilized in the drive system.

11. An electric motorized vehicle comprising the drive system according to any one of claims 1 to 10.

# F I G . 1

# FIG.2

N

N=15

N=9

N=3

DRIVE FREQUENCY [Hz]

# F I G . 3

(a)
RELATION TO VECTOR
CONTROL PERIOD

VECTOR CONTROL
PROCESS PERIOD Ts

UPDATE FOR
VOLTAGE COMMAND

Tn

VOLTAGE
COMMAND Vu

TRIANGLE
WAVE CARRIER

(b)
CARRIER CYCLE
CHANGE TIMING

CARRIER
CHANGE (1)

CARRIER
CHANGE (2)

CARRIER CAN BE CHANGED
TO AN OPTIONAL PHASE

# FIG.4

(1)SWITCHING
CONDITION OCCURS

(2)DELAY

(a)
PULSE SWITCHING IN THE
METHOD OF RELATED ART

(3)INSTANTANEOUS
SWITCHING IS POSSIBLE

(b)
PULSE SWITCHING IN THE
METHOD OF THE PRESENT INVENTION

# F I G . 5

# FIG.6

CARRIER WAVE

Vu   Vv

θd

Pu

Pv

Vuv

(a) WHEN δ=0

CARRIER WAVE

δ

Vu   Vv

θd

Pu

Pv

Vuv

SYMMETRY HAS
DETERIORATED

(b) WHEN δ HAS OCCURRED

SHIFTING THE PHASE
OF THE CARRIER WAVE

δ   Vu   Vv

θd

(c) METHOD OF FIG.5

# F I G . 7

# FIG.8

(a)
VOLTAGE COMMAND AND
TRIANGLE WAVE CARRIER

CARRIER WAVE

Vu

(b) TRIGGER Tg

(c)
VECTOR CONTROL
CALCULATION PROCESSING

# F I G . 9

# FIG.10

(a) SYNCH CONDITIONS
(MULTIPLE OF 3 AND ODD NUMBER)

(b) ODD NUMBER MULTIPLE CONDITION

CARRIER FREQUENCY [Hz]
DRIVE FREQUENCY [Hz]
NONSYNCHRONOUS PWM
LARGE HARMONIC
N=15, N=9, N=3
SMALL HARMONIC
N=15, 13, 11, 9, 7, 5, N=3

# FIG.11

# FIG.12

# FIG.13

(a) 2 PULSES

(b) 4 PULSES

(c) 8 PULSES

(d) 12 PULSES

# FIG.14

# FIG.15

# FIG.16

# FIG.17

# FIG.18

VECTOR CONTROL
PROCESS PERIOD Ts

UPDATE FOR
VOLTAGE COMMAND

(a) Ts=Tfc

PWM PERIOD Tfc

Ts

(b) Ts>Tfc

Ts

(c) Ts<Tfc

CARRIER
CHANGE

(d)
CARRIER CYCLE
CHANGE TIMING

**EP 2 690 775 A2**

## REFERENCES CITED IN THE DESCRIPTION

### Patent documents cited in the description

- JP 2005237194 A

- JP HEI81996251930 B